# EUROPÄISCHE PATENTSCHRIFT

(11) **EP 4 402 552 B1**
(45) Veröffentlichungstag und Bekanntmachung des Hinweises auf die Patenterteilung: **29.04.2026**
(21) Anmeldenummer: 22782704.5
(22) Anmeldetag: 12.09.2022
(51) Int. Cl.: G05D 1/00

(54) **SYSTEM ZUR ÜBERTRAGUNG VON BAUSTOFFEN VON EINER BASISSTATION AN EINEN BAUROBOTER**
SYSTEM FOR TRANSFERRING CONSTRUCTION MATERIALS FROM A BASE STATION TO A CONSTRUCTION ROBOT
SYSTÈME DE TRANSFERT DE MATÉRIAUX DE CONSTRUCTION D'UNE STATION DE BASE À UN ROBOT DE CONSTRUCTION

(30) Priorität: 15.09.2021 DE 102021210215
(43) Veröffentlichungstag der Anmeldung: 24.07.2024
(73) Patentinhaber: Technische Universität Dresden, 01069 Dresden (DE)
(72) Erfinder: RICHTER, Christian, 01127 Dresden (DE); ZICKLER, Robert, 01159 Dresden (DE); STENZEL, Christian, 01324 Dresden (DE); WILL, Frank, 59494 Soest (DE)
(74) Vertreter: Pfenning, Meinig & Partner mbB
(86) Internationale Anmeldenummer: PCT/EP2022/075307
(87) Internationale Veröffentlichungsnummer: WO 2023/041490

(56) Entgegenhaltungen:
- EP-A1- 3 824 787
- WO-A1-2017/190784
- CN-U- 209 829 315
- US-A1- 2020 061 840
- US-A1- 2020 121 153

## Beschreibung

Die Erfindung betrifft ein System zur automatisierten Durchführung von Bauarbeiten bei einem Neubau oder der Sanierung von älteren Gebäuden.

EP 3 824 787 A1 betrifft ein autonomes Reinigungsfahrzeug und eine zugehörige Andockstation, welche Energie und Flüssigkeit bereitstellt. Offenbart sind insbesondere ein autonom mobiler Roboter mit Antriebseinheit, elektronischer Steuerung, Energiespeicher und Flüssigkeitsbehälter sowie eine Andockstation mit komplementären Kopplungselementen, Flüssigkeitsvorrat, Steuereinheit und Positionierungseinrichtung.

Zur Automatisierung vieler Bauprozesse können zukünftig mobile Bauroboter eingesetzt werden. Solche Systeme befinden sich bereits in der Entwicklung oder im Einsatz. Beispiele sind u.a. mobile Roboter zur Baudokumentation und -überwachung, zum Anzeichnen und Markieren, zum Bohren, zum Mauern oder zum Auftragen von Farbe und Putz. Die Energieversorgung dieser Systeme erfolgt entweder über einen integrierten Kraftstofftank oder Elektroenergiespeicherelemente. Des Weiteren sind an einigen dieser Systeme ein zusätzlicher Vorratsbehälter für die zu verarbeitenden Baustoffe (z.B. Mörtel, Farbe oder Putz) vorhanden. Bisher existiert kein System bei dem das Nachfüllen des Energieträgers bzw. das Laden von Elektroenergiespeicherelementen automatisiert erfolgen kann. Auch ein automatisiertes Anmischen und Nachfüllen der benötigten Baustoffe sowie das Reinigen der Fördereinrichtungen und Verarbeitungswerkzeuge werden bisher nicht automatisiert durchgeführt.

Bisher erfolgt das Nachfüllen von Kraftstoff manuell, ebenso bei elektrischer Energieversorgung über das anschließen eines Ladekabels oder das permanente Mitführen eines Schleppkabels und der Versorgung aus dem Stromnetz. Das Anmischen und Nachfüllen der Baustoffe sowie das Reinigen der Verarbeitungswerkzeuge (Aktoren) sowie der internen Vorrats-, Pump- und Fördersysteme sind ebenfalls Tätigkeiten, die manuell durchgeführt werden.

Die manuelle Ausführung der genannten Tätigkeiten führt dazu, dass die zugehörigen Bauroboter - auch wenn diese selbst einen hohen Automatisierungsgrad besitzen - nicht lange autonom agieren können. Meist können diese nur wenige Stunden arbeiten, bis die mitgeführten Energie- oder Baustoffvorräte aufgebraucht sind. Die Notwendigkeit eines regelmäßigen manuellen Eingriffs verhindert ein vollautonomes System, das selbstständig über einen langen Zeitraum (z.B. über 24 Stunden) arbeiten kann, ohne dass eingegriffen werden muss.

Eine Vergrößerung der Vorratsbehälter bzw. Elektroenergiespeicher birgt den Nachteil, dass die Systeme zu teuer, zu groß oder zu schwer für den mobilen Einsatz werden. Des Weiteren ist der limitierende Faktor oftmals die Verarbeitungszeit des frisch angemischten Baustoffs, die in der Regel maximal nur wenige Stunden beträgt.

Es ist daher Aufgabe der Erfindung, Möglichkeiten für die Automatisierung der Hilfsprozesse Auffüllen von Energiespeichern oder Energieträgern, Anmischen von Baustoffen, Nachfüllen von Baustoffen sowie Reinigen der Fördersysteme und Verarbeitungswerkzeuge für mobile Bauroboter anzugeben, so dass eine Reduzierung der dazu erforderlichen manuellen Eingriffe und die Befähigung der Systeme über einen längeren Zeitraum autonom zu arbeiten, möglich werden.

Erfindungsgemäß wird diese Aufgabe mit einem System, das die Merkmale des Anspruchs 1 aufweist, gelöst. Vorteilhafte Ausgestaltungen und Weiterbildungen der Erfindung können mit in abhängigen Ansprüchen bezeichneten Merkmalen realisiert werden.

Die Aufgabe wird durch Verwendung einer semistationären Basisstation gelöst, die in regelmäßigen Abständen oder bei Bedarf durch mindesten einen mobilen Bauroboter angefahren wird und die bereits erwähnten Prozesse automatisiert durchführt.

Der mindestens eine mobile Bauroboter, der zur Durchführung von Bauarbeiten ausgebildet ist, verfügt über mindestens eine Antriebseinheit zu seiner Bewegung, einen Kraftstoffvorratsbehälter und/oder ein Elektroenergiespeicherelement, mindestens einen Vorratsbehälter für Baustoff und mindestens einen Aktuator, der zur Durchführung von Bauarbeiten ausgebildet ist. Außerdem sind eine elektronische Steuerung für die mindestens eine Antriebseinheit und den mindestens einen Aktuator sowie lösbare Anschlusselemente mit denen eine temporäre Verbindung zu Anschlusselementen, die an einer Mehrfachkupplung einer semistationären Basisstation vorhanden sind und die Anschlusselemente am Bauroboter und an der Basisstation komplementär zueinander ausgebildet und angeordnet sind, vorhanden. Eine Antriebseinheit kann mit einem Verbrennungsmotor, der mit einem Gas oder flüssigem Kraftstoff betrieben werden kann, in Verbindung mit einem entsprechenden Kraftstoffvorratsbehälter, der am Bauroboter vorhanden ist, betrieben werden kann. Sie kann aber allein oder zusätzlich auch mindestens einen elektrischen Motor sowie ein Elektroenergiespeicherelement aufweisen. Mit der Antriebseinheit kann man die mobile Bewegung des jeweiligen Bauroboters erreichen und/oder den jeweiligen Aktuator bewegen.

An der Basisstation ist eine Zustelleinheit vorhanden, die zur Verbindung der Anschlusselemente des Bauroboters und der Basisstation an der Mehrfachkupplung ausgebildet ist. Außerdem sind mindestens ein Anschluss für Kraftstoff und/oder elektrische Energie, in der Basisstation mindestens ein Vorratsbehälter für Baustoff, dessen Aufnahmevolumen ein Mehrfaches größer als das Aufnahmevolumen des Vorratsbehälters des Bauroboters ist, eine Dosier- und/oder Mischeinheit für ungemischten Baustoff und mindestens eine Flüssigkeit, eine Pumpe, ein Kraftstoffvorratsbehälter und/oder ein Elektroenergiespeicherelement sowie eine elektronische Steuer- und Regeleinheit vorhanden.

Es kann auch ein Anschluss für Frischwasser vorhanden sein.

In der Basisstation kann auch ein Aufnahmebehälter für Brauch- oder Abwasser vorhanden und mit einem Anschlusselement der Mehrfachkupplung verbunden sein. Damit kann man bei den Arbeiten verschmutztes Wasser in die Basisstation von einem Bauroboter aufnehmen.

Vorteilhaft können in den Vorrats- und Aufnahmebehältern jeweils mindestens ein Sensor zur Erfassung des jeweiligen Füllstandes vorhanden und jeweils mit der elektronischen Steuereinheit oder der elektronischen Steuer- und Regeleinheit verbunden sein. Damit kann man insbesondere bestimmen wann ein Bauroboter die Basisstation zum Nachfüllen und -laden anfahren oder ein Nachfüllen einer Basisstation erfolgen muss.

Besonders vorteilhaft können am Bauroboter und der Basisstation jeweils eine drahtlos betreibbare Sende- und Empfangseinheit, die zur Übertragung von momentanen Positionskoordinaten zum Manövrieren des Bauroboters und/oder Informationen zu momentanen Füllständen oder des Ladezustandes eines Elektroenergiespeicherelements ausgebildet sind, vorhanden und mit der elektronischen Steuereinheit und der elektronischen Steuer- und Regeleinheit verbunden sein. So können momentane Positionskoordinaten satellitengestützt bestimmt und übertragen werden. Es ist aber auch der Einsatz von radar-, lidar- oder ultraschallgestützten Systemen allein oder zusätzlich dazu möglich. Durch die Übertragung von Füllständen oder Ladezuständen kann einmal gesichert werden, dass an der Basisstation ausreichend Wasser, Baustoff bzw. Elektroenergie zur Verfügung steht, um ein sicheres Nachfüllen bzw. Nachladen am Bauroboter zu gewährleisten. Außerdem kann man aber auch bereits vorbereitende Maßnahme treffen, bevor ein Bauroboter an der Basisstation andockt. So kann beispielsweise ein Mischvorgang bereits eingeleitet werden und erst später der Bauroboter die Basisstation zum Nachfüllen anfahren. Es ist so auch ein optimiertes Nachfüllen bzw. Nachladen möglich, indem ein Bauroboter eine Basisstation rechtzeitig immer dann anfährt, wenn mindestens ein Medium nachgefüllt bzw. nachgeladen werden muss, und so unnötige Mehrfachanfahrten vermieden werden können. Eine Basisstation kann so auch Anforderungen zum Nachfüllen an ein zentrales Logistikzentrum versenden, wenn seine Vorräte dies erfordern.

An der Basisstation kann auch ein Leistungswandler und Laderegler zur Beeinflussung der elektrischen Leistung, mit der ein Elektroenergiespeicherelement geladen wird, vorhanden sein.

An einem jeweiligen Elektroenergiespeicherelement kann ein Sensor, der zur Bestimmung des momentanen Ladezustands ausgebildet und an die jeweilige Sende- und Empfangseinheit und/oder die elektronische Steuereinheit oder die elektronische Steuer- und Regeleinheit angeschlossen ist, vorhanden sein.

An der Basisstation kann euch eine Vorrichtung zum Schneiden, Fräsen, Schleifen und/oder Bohren von Werkstücken, wie beispielsweise Steine, Fliesen, Dämmplatten, Dachziegel oder Holzstücke vorhanden sein. Die Werkstücke werden dabei von mindestens einem mobilen Bauroboter zur Basisstation befördert, dort an einer definierten Stelle abgelegt oder eingesetzt, durch die entsprechende Vorrichtung zum Schneiden, Fräsen, Schleifen oder Bohren bearbeitet und anschließend vom mobilen Bauroboter wieder aufgenommen und verbaut. Dies ist besonders vorteilhaft um die notwendigen Vorrichtungen für Prozesse, welche nicht bei jedem zu verbauenden Werkstück durchgeführt werden müssen, nicht in den mobilen Roboter integrieren zu müssen und somit dessen Gewicht und Energieverbrauch zu reduzieren.

Die Erfindung betrifft ein System, das zum Nachfüllen von Energieträgern bzw. dem Laden von im Bauroboter integrierten Elektroenergiespeicherelementen (Akkumulatoren) oder dem Auffüllen anderer flüssiger oder gasförmiger Energieträger sowie zum Anmischen und Nachfüllen von Baustoffen (z.B. Mörtel, Farbe, Estrich, Fliesenkleber) oder Frischwasser genutzt werden kann. Die Basisstation kann dabei autonom vom Bauroboter angefahren werden. Die Verbindung zwischen Bauroboter und Basisstation erfolgt automatisch mit Hilfe einer Mehrfachkupplung über entsprechende Anschlusselemente an Bauroboter und Basisstation. Weitere Funktionen, die in die Basisstation integriert werden können, sind das Bearbeiten, Nachfüllen oder Zuführen von Werkstücken oder Verbrauchsstoffen sowie das Spülen und Reinigen des Bauroboters und der Anbauwerkzeuge (Aktuatoren).

Mit der Erfindung wird eine Kombination mindestens eines mobilen Bauroboters mit einer semistationären Basisstation, die in der Lage ist, verschiedene Hilfsprozesse automatisiert durchzuführen, zur Verfügung gestellt. Dabei kann man unter semistationär verstehen, dass die Basisstation über keinen integrierten Fahrantrieb verfügen muss, (immobil) jedoch ohne großen Einrichtungsaufwand schnell versetzt werden kann (z.B. mithilfe eines Krans oder eines Gabelstaplers).

Mit der Erfindung können mobile Baurobotersysteme dazu befähigt werden, über einen langen Zeitraum autonom, d.h. ohne manuelle Eingriffe, zu arbeiten. Der notwendige Personalaufwand wird dabei auf ein Mindestmaß reduziert, womit Personalkosten gespart und die Wirtschaftlichkeit des Gesamtsystems gesteigert werden können. Des Weiteren kann beispielsweise durch ein automatisiertes Anmischen der Baustoffe eine gleichmäßigere Qualität erreicht werden. Ein weiterer Vorteil besteht darin, dass der Bauroboter in einem gesperrten Sicherheitsbereich arbeiten kann und kein regelmäßiger Zutritt von Personen in diesen Bereich erforderlich ist.

Nachfolgend soll die Erfindung beispielhaft näher erläutert werden.

Dabei zeigt:

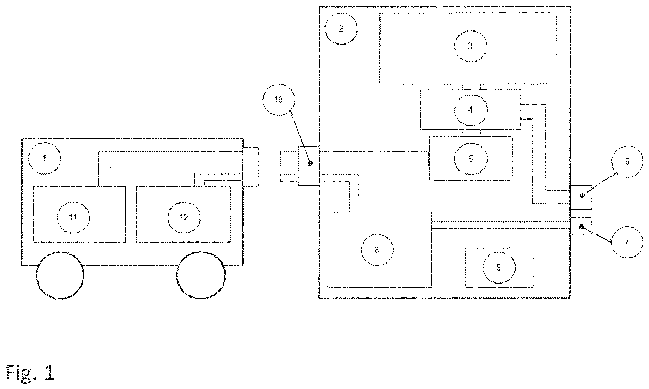

- Figur 1: in schematischer Form ein Beispiel eines erfindungsgemäßen Systems.

Der mobile Bauroboter 1 fährt die Basisstation 2 automatisch an und verbindet sich mit dieser über eine Mehrfachkupplung mit der Zustelleinheit 10. Die Mehrfachkupplung kann für den Austausch von Energie, Baustoffen, Frisch- und Abwasser sowie ggf. auch zur Übertragung von Daten und Informationen (z.B. Füllstände, einen Ladezustand) genutzt werden und entsprechende Anschlusselemente dort aufweisen. In der Basisstation 2 befindet sich ein Vorratsbehälter 3 für den ungemischten Baustoff. Dies können trockene Baustoffe, wie z.B. trockener Mörtel, oder flüssige Baustoffe, wie z.B. Farbe, sein. Alternativ zu einem integrierten Vorratsbehälter 3 kann der Baustoff auch in einem externen Behälter gelagert und durch eine separate Fördereinrichtung über ein Anschlusselement der Basisstation dem Bauroboter 1 zugeführt werden (nicht dargestellt). Der Baustoff wird durch eine Dosier- und Mischeinheit 4 dosiert und angemischt. Das Dosieren kann beispielsweise über eine Zellenradschleuse, eine Querförderschnecke oder eine Dosierpumpe erfolgen. Für das Mischen kann beispielsweise ein Rührwerk verwendet werden. Wird zusätzliches Wasser zum Anmischen benötigt, wird dieses über einen Wasseranschluss 6 bereitgestellt. Alternativ kann ein Wassertank in die Basisstation integriert werden (nicht dargestellt). Der angemischte Baustoff wird anschließend mittels einer Pumpe 5 über die Mehrfachkupplung und die entsprechenden Anschlusselemente zum integrierten Vorratsbehälter 11 für einen Baustoff in den Bauroboter 1 gefördert.

Über einen elektrischen Stromanschluss 7 wird die Basisstation 2 mit elektrischer Energie versorgt. Diese wird durch einen Leistungswandler und Laderegler 8 über die Mehrfachkupplung und entsprechende Anschlusselemente an den integrierten Akkumulator als Elektroenergiespeicherelement 12 des Bauroboters 1 übertragen. Der gesamte Prozess (Mischen, Dosieren, Pumpen, Laderegelung usw.) wird über eine elektronische Steuer- und Regeleinheit 9 gesteuert und überwacht. In nicht dargestellter Form kann auch ein gas- oder flüssiger Kraftstoff in einen Vorratsbehälter für Kraftstoff dem Bauroboter 1 zugeführt werden.

Zusätzlich ist es möglich, den Bauroboter 1 über den Wasseranschluss 6 und die Mehrfachkupplung mit Frischwasser zu versorgen, das dieser beispielsweise für eine integrierte Reinigung verwenden kann (nicht dargestellt). Das anfallende Abwasser wird über die Mehrfachkupplung und die entsprechenden Anschlusselemente in die Basisstation 2 geleitet und in einem integrierten Abwasserbehälter (nicht dargestellt) gelagert oder über einen separaten Abwasseranschluss abgeführt (z. B. an einen externen Abwassertank).

Die Integration weiterer Komponenten zur Automatisierung weiterer Hilfsprozesse - z. B. zum Vermessen und Markieren von Werkstücken (z. B. Fliesen, Steine, usw.) - ist prinzipiell möglich.

## Patentansprüche

1. System zur automatisierten Durchführung von Bauarbeiten bei einem Neubau oder der Sanierung von älteren Gebäuden, bestehend aus mindestens einem autonom mobilen Bauroboter (1), der zur Durchführung von Bauarbeiten ausgebildet ist und über mindestens eine Antriebseinheit zu seiner Bewegung, einen Kraftstoffvorratsbehälter und/oder ein Elektroenergiespeicherelement (12), mindestens einen Vorratsbehälter (11) für Baustoff und mindestens einen Aktuator, der zur Durchführung von Bauarbeiten ausgebildet ist, eine elektronische Steuerung für die mindestens eine Antriebseinheit sowie lösbare Anschlusselemente, mit denen eine temporäre Verbindung zu Anschlusselementen, die an einer Mehrfachkupplung einer semistationären Basisstation (2) vorhanden sind und die Anschlusselemente am Bauroboter (1) und an der Basisstation (2) komplementär zueinander ausgebildet und angeordnet sind, verfügt, wobei
an der Basisstation (2) eine Zustelleinheit (10) vorhanden ist, die zur Verbindung der Anschlusselemente des Bauroboters (1) und der Basisstation (2) an der Mehrfachkupplung ausgebildet ist, mindestens ein Anschluss (7) für Kraftstoff und/oder elektrische Energie, in der Basisstation (2) mindestens ein Vorratsbehälter (3) für Baustoff, dessen Aufnahmevolumen ein Mehrfaches größer als das Aufnahmevolumen des Vorratsbehälters (11) des Bauroboters (1) ist, ein Kraftstoffvorratsbehälter und/oder ein Elektroenergiespeicherelement sowie eine elektronische Steuer- und Regeleinheit (9) vorhanden sind,
**dadurch gekennzeichnet, dass**
eine Dosier- und/oder Mischeinheit (4) für ungemischten Baustoff und mindestens eine Flüssigkeit sowie eine Pumpe (5) vorhanden sind.

2. System nach Anspruch 1, **dadurch gekennzeichnet, dass** in der Basisstation (2) ein Aufnahmebehälter für Brauch- oder Abwasser vorhanden und mit einem Anschlusselement der Mehrfachkupplung verbunden ist.

3. System nach einem der vorhergehenden Ansprüche, **dadurch gekennzeichnet, dass** in den Vorrats- und Aufnahmebehältern jeweils mindestens ein Sensor zur Erfassung des jeweiligen Füllstandes vorhanden und jeweils mit der elektronischen Steuereinheit oder der elektronischen Steuer- und Regeleinheit (9) verbunden ist.

4. System nach einem der vorhergehenden Ansprüche, **dadurch gekennzeichnet, dass** eine Zellenradschleuse, eine Querförderschnecke oder eine Dosierpumpe Bestandteil einer Mischeinheit ist.

5. System nach einem der vorhergehenden Ansprüche, **dadurch gekennzeichnet, dass** am Bauroboter (1) und der Basisstation (2) eine drahtlos betreibbare Sende- und Empfangseinheit, die zur Übertragung von momentanen Positionskoordinaten zum Manövrieren des Bauroboters (1) und/oder Informationen zu momentanen Füllständen oder des Ladezustandes eines Elektroenergiespeicherelements (12) ausgebildet sind, vorhanden und mit der elektronischen Steuereinheit und der elektronischen Steuer- und Regeleinheit verbunden sind.

6. System nach einem der vorhergehenden Ansprüche, **dadurch gekennzeichnet, dass** an der Basisstation (2) ein Leistungswandler und Laderegler (8) zur Beeinflussung der elektrischen Leistung, mit der ein Elektroenergiespeicherelement (12) geladen wird, vorhanden ist.

7. System nach einem der vorhergehenden Ansprüche, **dadurch gekennzeichnet, dass** an einem jeweiligen Elektroenergiespeicherelement (12) ein Sensor, der zur Bestimmung des momentanen Ladezustands ausgebildet und an die jeweilige Sende- und Empfangseinheit und/oder die elektronische Steuereinheit oder die elektronische Steuer- und Regeleinheit angeschlossen ist, vorhanden ist.

8. System nach einem der vorhergehenden Ansprüche, **dadurch gekennzeichnet, dass** ein Anschluss für Frischwasser (6) an der Basisstation (2) vorhanden ist.

## Claims

1. A system for automatically carrying out construction work in new buildings or renovating older buildings, comprising at least one autonomous mobile construction robot (1) configured to carry out construction work and equipped with at least one drive unit for its movement, a fuel reservoir and/or an electrical energy storage element (12), at least one storage vessel (11) for building material and at least one actuator configured to carry out construction work, an electronic control system for the at least one drive unit, and removable connection elements which can make a temporary connection to connection elements provided on a multiple coupling of a semi-stationary base station (2), and the connection elements on the construction robot (1) and on the base station (2) are configured and arranged to complement each other,
a feed unit (10), configured to connect the connection elements of the construction robot (1) and the base station (2) to the multiple coupling, being provided on the base station (2), at least one connection (7) for fuel and/or electrical energy, at least one storage vessel (3) in the base station (2) for building material with a capacity several times greater than the capacity of the storage vessel (11) of the construction robot (1), a fuel reservoir and/or an electrical energy storage element, and an electronic control and regulation unit (9),
**characterised in that**
a dosing and/or mixing unit (4) for unmixed building material and at least one liquid, as well as a pump (5), are provided.

2. The system according to claim 1, **characterised in that** a receptacle for service or waste water is provided in the base station (2) and is connected to a connection element of the multiple coupling.

3. The system according to any one of the preceding claims, **characterised in that** at least one sensor connected to the electronic control unit or the electronic control and regulation unit (9) to detect the respective fill level is provided in each of the storage vessel and receptacle.

4. The system according to any one of the preceding claims, **characterised in that** a rotary valve, a cross conveyor screw or a metering pump is part of a mixing unit.

5. The system according to any one of the preceding claims, **characterised in that** a wirelessly operable transmitting and receiving unit is provided on the construction robot (1) and the base station (2), which is configured to transmit current position coordinates to manoeuvre the construction robot (1) and/or information on current fill levels or the charge status of an electrical energy storage element (12), and are connected to the electronic control unit and the electronic control and regulation unit.

6. The system according to any one of the preceding claims, **characterised in that** a power converter and charge controller (8) is provided on the base station (2) to influence the electrical power charging of an electrical energy storage element (12).

7. The system according to any one of the preceding claims, **characterised in that** a sensor is provided on a respective electrical energy storage element (12), which is configured to determine the current charge status and is connected to the respective transmitting and receiving unit and/or the electronic control unit or the electronic control and regulation unit.

8. The system according to any one of the preceding claims, **characterised in that** a connection for fresh water (6) is provided on the base station (2).

## Revendications

1. Système pour l'exécution automatisée de travaux de construction lors d'une nouvelle construction ou de la rénovation de bâtiments anciens, constitué d'au moins un robot de construction (1) mobile de manière autonome, qui est réalisé pour l'exécution de travaux de construction et qui dispose d'au moins une unité d'entraînement pour son déplacement, d'un réservoir de stockage de carburant et/ou d'un élément de stockage d'énergie électrique (12), d'au moins un réservoir de stockage (11) pour des matériaux de construction et d'au moins un actionneur, qui est réalisé pour effectuer des travaux de construction, d'une commande électronique pour l'au moins une unité d'entraînement ainsi que d'éléments de raccordement amovibles avec lesquels une liaison temporaire avec des éléments de raccordement, qui sont présents sur un accouplement multiple d'une station de base semi-stationnaire (2) et les éléments de raccordement sont réalisés et disposés de manière complémentaire sur le robot de construction (1) et sur la station de base (2), dans lequel
une unité d'avance (10) est présente, qui est réalisée pour relier les éléments de raccordement du robot de construction (1) et de la station de base (2) à l'accouplement multiple, au moins un raccordement (7) pour le carburant et/ou l'énergie électrique, dans la station de base (2) au moins un réservoir de stockage (3) pour le matériau de construction, dont le volume de réception est plusieurs fois supérieur au volume de réception du réservoir de stockage (11) du robot de construction (1), un réservoir de stockage de carburant et/ou un élément de stockage d'énergie électrique ainsi qu'une unité de commande et de régulation électronique (9) sont présents sur la station de base (2),
**caractérisé en ce que**
une unité de dosage et/ou de mélange (4) pour le matériau de construction non mélangé et au moins un liquide ainsi qu'une pompe (5) sont présents.

2. Système selon la revendication 1, **caractérisé en ce qu'**un réservoir de réception d'eau sanitaire ou d'eaux usées est présent dans la station de base (2) et relié à un élément de raccordement de l'accouplement multiple.

3. Système selon l'une quelconque des revendications précédentes, **caractérisé en ce qu'**au moins un capteur est présent dans chacun des réservoirs de stockage et de réception pour détecter le niveau de remplissage respectif et relié respectivement à l'unité de commande électronique ou à l'unité de commande et de régulation électronique (9).

4. Système selon l'une quelconque des revendications précédentes, **caractérisé en ce qu'**une écluse à roue cellulaire, une vis sans fin transversale ou une pompe de dosage fait partie d'une unité de mélange.

5. Système selon l'une quelconque des revendications précédentes, **caractérisé en ce qu'**une unité d'émission et de réception pouvant fonctionner sans fil, qui sont réalisées pour transmettre des coordonnées de position momentanées pour manœuvrer le robot de construction (1) et/ou des informations sur des niveaux de remplissage momentanés ou l'état de charge d'un élément de stockage d'énergie électrique (12), sont présentes sur le robot de construction (1) et la station de base (2) et reliées à l'unité de commande électronique et à l'unité de commande et de régulation électronique.

6. Système selon l'une quelconque des revendications précédentes, **caractérisé en ce qu'**un convertisseur de puissance et un régulateur de charge (8) sont présents sur la station de base (2) pour influencer la puissance électrique avec laquelle un élément de stockage d'énergie électrique (12) est chargé.

7. Système selon l'une quelconque des revendications précédentes, **caractérisé en ce qu'**un capteur, qui est réalisé pour déterminer l'état de charge momentané et raccordé à l'unité d'émission et de réception respective et/ou à l'unité de commande électronique ou à l'unité de commande et de régulation électronique, est présent sur un élément de stockage d'énergie électrique (12) respectif.

8. Système selon l'une quelconque des revendications précédentes, **caractérisé en ce qu'**un raccordement pour l'eau fraîche (6) est présent sur la station de base (2).
